(19) Europäisches Patentamt
European Patent Office
Office européen des brevets

(11) **EP 2 877 386 B1**

(12) **FASCICULE DE BREVET EUROPEEN**

(45) Date de publication et mention de la délivrance du brevet:
**12.04.2017 Bulletin 2017/15**

(21) Numéro de dépôt: **13739757.6**

(22) Date de dépôt: **01.07.2013**

(51) Int Cl.:
*B62D 15/02* (2006.01)     *B60K 31/00* (2006.01)
*G01C 21/36* (2006.01)     *G08G 1/16* (2006.01)
*B60W 50/14* (2012.01)     *B60W 30/12* (2006.01)
*B60W 30/18* (2012.01)

(86) Numéro de dépôt international:
**PCT/FR2013/051534**

(87) Numéro de publication internationale:
**WO 2014/016486 (30.01.2014 Gazette 2014/05)**

(54) **SYSTEME D'ASSISTANCE AU CHANGEMENT DE VOIE POUR UN VEHICULE**

KRAFTFAHRZEUG MIT EINEM SPURWECHSELASSISTENZSYSTEM

LANE CHANGE ASSISTANCE SYSTEM FOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2012 FR 1257224**

(43) Date de publication de la demande:
**03.06.2015 Bulletin 2015/23**

(73) Titulaire: **Peugeot Citroën Automobiles SA
78140 Vélizy Villacoublay (FR)**

(72) Inventeur: **DESCHAMPS, Vincent
F-92130 Issy Les Moulineaux (FR)**

(56) Documents cités:
**EP-A1- 1 726 513          EP-A2- 1 598 233
DE-A1- 10 327 869          DE-A1-102007 015 227
US-A1- 2010 253 595**

**Description**

La présente invention concerne de manière générale un système d'aide à la conduite pour un véhicule et plus particulièrement un système d'assistance au changement de voie pour un véhicule automobile.

Un système mettant en oeuvre la fonction 'assistance au changement de voie' (ou '*Lane Change Assist*' (LCA) en anglais) actuellement proposée sur un certain nombre de véhicules utilise deux radars implantés à l'arrière gauche et l'arrière droit du véhicule derrière le pare-choc. Les radars permettent de « voir » sur les voies adjacentes jusqu'à de l'ordre de 70 mètres derrière le véhicule, et de positionner les véhicules détectés dans le plan horizontal en X et Y.

De plus, le système met en oeuvre deux sous-fonctions :

(i) la fonction 'Surveillance Angle Mort' (SAM) qui prévient le conducteur de la présence d'un véhicule dans la zone angle mort dans le cas où le véhicule porteur du système se fait dépasser par un véhicule cible, et dans le cas où le véhicule porteur du système dépasse un véhicule cible avec un différentiel de vitesse inférieur à un certain seuil (typiquement 10km/h) ; et

(ii) la fonction 'avertissement d'un véhicule approchant' (en anglais, '*Closing Vehicle Warning*' (CVW)) qui prévient le conducteur de la présence d'un véhicule dans une voie adjacente lorsque le temps avant collision (en anglais, '*Time To Collision*' (TTC)) devient inférieur à un seuil à paramétrer (typiquement 4 secondes). Le temps avant collision (TTC) est défini comme le temps mis par le véhicule cible pour arriver au niveau du pare-choc arrière du véhicule porteur du système dans l'hypothèse où les vitesses de l'un et de l'autre demeureraient constantes. C'est donc la distance entre les deux véhicules que divise la vitesse relative entre les deux véhicules.

La zone de couverture des radars nécessaire en ligne droite est typiquement la suivante (mêmes zones de couverture gauche - droite) :

- En zone SAM, le radar doit couvrir en latéral, par rapport au flanc du véhicule, de 0 à une distance de l'ordre de 4 à 5 mètres, et en longitudinal, sur une zone comprise entre la ligne rétroviseur et jusqu'à une distance de l'ordre de 4 à 5 mètres derrière le pare-choc arrière ;

- En zone CVW, le radar doit couvrir en latéral, par rapport au flanc du véhicule, de 0 à une distance de l'ordre de 4 à 5 mètres, et en longitudinal, sur une zone comprise entre la fin de la zone SAM et jusqu'à environ 70 mètres derrière le pare-choc arrière du véhicule.

Pour la fonction CVW, afin de pouvoir déterminer la position des véhicules cibles pertinents présents dans les voies adjacentes, il est nécessaire d'estimer un « historique de trajectoire » du véhicule porteur du système. Cela est en général réalisé par l'utilisation de données disponibles sur les véhicules qui sont la vitesse du véhicule et la vitesse de lacet et/ou l'angle volant.

Cet historique de trajectoire est placé dans le repère du véhicule porteur et des voies adjacentes « virtuelles » sont ensuite « placées » de part et d'autre de cet historique de trajectoire.

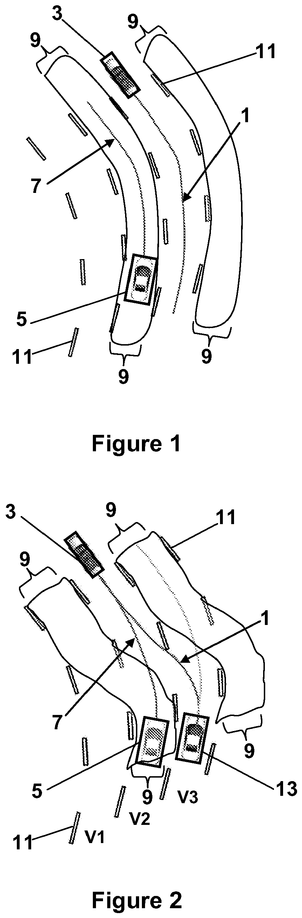

Cela fonctionne bien dans la plupart des cas, typiquement lorsque le véhicule porteur demeure dans sa voie. La Figure 1 illustre l'historique de trajectoire 1 du véhicule porteur 3. Le véhicule cible 5 et la trajectoire future 7 la plus probable du véhicule cible 5 (s'il demeure dans sa voie) est aussi illustrée. Les zones 9 sont les zones considérées comme représentant les voies adjacentes et les lignes pointillées représentent les vraies lignes discontinues 11 de l'infrastructure.

Comme le véhicule porteur 3 est demeuré dans sa voie, les voies adjacentes « estimées » 9 correspondent aux voies adjacentes de l'infrastructure, et si le temps inter-véhicule (TIV) est suffisamment faible, le véhicule 5 sera signalé au conducteur du véhicule porteur 3, et cela est pertinent.

Cela peut cependant induire des fausses détections ou des non détections dans le cas où le véhicule porteur du système 3 change de voie. Dans ce cas, l'historique de trajectoire 1 n'est plus pertinent pendant un certain temps avant de le redevenir.

La Figure 2 illustre le cas où le véhicule 3 porteur du système change de voie, pour passer de la troisième voie V3 à la deuxième voie V2. Le véhicule 5 qui se trouve aussi sur la deuxième voie V2 est présent sur la voie adjacente estimée 9 par le système, qui ne correspond plus à la voie adjacente. Si le temps inter-véhicule TIV est inférieur au seuil, on va le signaler au conducteur du véhicule porteur 3 comme étant sur la voie adjacente gauche, alors que ce n'est plus le cas. Un véhicule cible 13 qui est sur la troisième voie V3 (ou la première voie), ne va lui être signalé que tardivement même si son temps inter-véhicule TIV justifierait qu'il le soit avant, car il n'est pas encore rentré dans la voie adjacente estimée 9, alors qu'il est bien sur la vraie voie adjacente du véhicule porteur 3.

Ce phénomène sera d'autant plus facile à rencontrer que le système fonctionne à de basses vitesses véhicules.

Le document US6388565 divulgue un système d'assistance au changement de voie incluant des moyens pour déterminer la trajectoire prise par le véhicule, des moyens pour déterminer la géométrie de la chaussée, des moyens pour déterminer une position d'un véhicule cible, et des moyens pour signaler la présence du véhicule cible dans une voie adjacente. Toutefois, ce système ne permet pas la détection des véhicules dans les voies adjacentes après un changement de voie du véhicule porteur du système d'assistance au changement de voie.

Le document DE10327869 décrit un système conforme au préambule de la revendication 1.

Ce système ne permet pas la détection des véhicules dans les voies adjacentes après un changement de voie du véhicule porteur du système d'assistance au changement de voie.

Un but de la présente invention est de répondre aux inconvénients mentionnés ci-dessus et en particulier, de proposer un système d'assistance au changement de voie qui assure la détection et la signalisation de la présence de véhicules dans les voies adjacentes après un changement de voie du véhicule porteur d'un système d'assistance au changement de voie et limite ainsi les fausses détections ou des non détections dans le cas où le véhicule porteur du système change de voie.

Pour cela un premier aspect de l'invention concerne un système d'assistance au changement de voie pour un véhicule conforme à la partie caractérisante de la revendication 1.

Un tel système permet de reconstituer les « vraies » voies correspondant aux voies de la route, de savoir dans quelle voie de la route se trouve le véhicule porteur et de déterminer si un véhicule cible est dans une « vraie » voie adjacente. Un tel système assure la détection de la présence de véhicules dans les voies adjacentes même après un changement de voie du véhicule porteur.

De manière avantageuse, il comprend en outre des moyens pour déterminer, en fonction du temps, une position des lignes de marquage de voie par rapport au véhicule.

De manière très avantageuse, les moyens pour déterminer une trajectoire de chacune des lignes de marquage de voie sont configurés pour calculer une trajectoire de chacune des lignes de marquage de voie en utilisant la trajectoire prise par le véhicule et la position des lignes de marquage de voie.

Une réalisation particulièrement intéressante consiste en ce qu'il est configuré pour déterminer la voie d'un véhicule suiveur en utilisant les trajectoires des lignes de marquage de voie et la position du véhicule suiveur par rapport au véhicule, et pour déterminer la voie du véhicule en utilisant les trajectoires des lignes de marquage de voie et la position du véhicule.

De manière avantageuse, les moyens pour déterminer une position des lignes de marquage de voie par rapport au véhicule comprennent une caméra positionnée à l'avant du véhicule et/ou une caméra positionnée à l'arrière du véhicule.

De manière avantageuse, il comprend un système de navigation et de positionnement par satellite incluant une cartographie des voies de la route, le système étant configuré pour déterminer une trajectoire des lignes de marquage de voie de la route à partir de la cartographie des voies.

Selon un second aspect, la présente l'invention concerne un procédé pour déterminer la présence d'un véhicule suiveur dans une voie adjacente à une voie d'un véhicule conforme à l'objet de la revendication 7.

De manière avantageuse, il comprend en outre l'étape qui consiste à déterminer, en fonction du temps, une position des lignes de marquage de voie par rapport au véhicule.

De manière avantageuse, lors de l'étape de détermination d'une trajectoire des lignes de marquage de voie, une trajectoire de chacune des lignes de marquage de voie est calculée en utilisant la trajectoire prise par le véhicule et la position des lignes de marquage de voie.

Selon un troisième aspect, la présente l'invention concerne un véhicule automobile comprenant un système tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

- la Figure 1 illustre l'historique de trajectoire d'un véhicule porteur et la trajectoire la plus probable d'un véhicule suiveur ;

- la Figure 2 illustre le cas où le véhicule porteur change de voie, pour passer de la troisième voie à la deuxième voie, et le véhicule suiveur se trouve sur la deuxième voie que le système conventionnel d'assistance au changement de voie signale toujours comme une voie adjacente ;

- la Figure 3 représente un système d'assistance au changement de voie selon un premier mode de réalisation de la présente invention ;

- La Figure 4 illustre une trajectoire (X(T), Y(T)) du véhicule porteur calculée par les moyens pour déterminer une trajectoire prise par le véhicule ;

- La Figure 5a illustre les positions des lignes de marquage de voie à un instant T déterminées par le système d'assistance au changement de voie de la présente invention ;

- La Figure 5b illustre les positionnements des lignes externes de marquage par rapport au véhicule porteur suivant l'axe y pour un temps T compris entre 0 et t déterminés par le système d'assistance au changement de voie de la présente invention;

- La Figure 5c illustre les trajectoires des lignes de marquage externes calculées par le système d'assistance au changement de voie de la présente invention pour T compris entre 0 et t ;

- La Figure 5d illustre la trajectoire $(X_{ligne}(T), Y_{ligne}(T))$ de chacune des lignes de marquage de voie dans le repère du véhicule porteur pour un temps T compris entre 0 et t calculée par les moyens pour déterminer une position des lignes de marquage de voie de la présente invention ;

- La Figure 6 illustre le cas où le véhicule porteur du système d'assistance au changement de voie selon la présente invention change de voie, pour passer de la troisième voie V3 à la deuxième voie V2 ;

- la Figure 7 représente un système d'assistance au changement de voie selon un deuxième mode de réalisation de la présente invention.

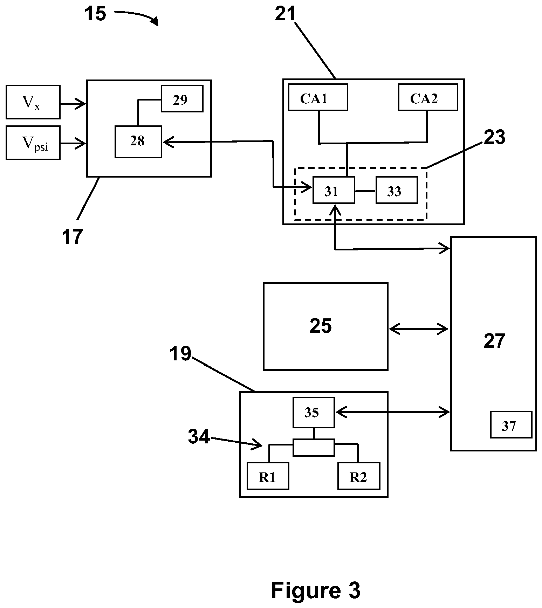

La Figure 3 représente un système 15 d'assistance au changement de voie selon un premier mode de réalisation de la présente invention. Le système 15 comprend des moyens 17 pour déterminer une trajectoire prise par le véhicule 3, des moyens 19 pour déterminer une position d'un véhicule suiveur 5 par rapport au véhicule 3, des moyens 21 pour déterminer, en fonction du temps, une position des lignes de marquage de voie sur une route, des moyens 23 pour calculer une trajectoire de chacune des lignes de marquage de voie et des moyens 25 pour signaler la présence d'un véhicule suiveur 5. Le système 15 comprend en outre un calculateur central 27.

Les moyens 17 pour déterminer une trajectoire prise par le véhicule (l'historique de trajectoire du véhicule porteur) comprend une unité de calcul 28 et des moyens de stockage 29, tel qu'une mémoire flash, incluant un logiciel permettant de construire ou établir une trajectoire (X,Y) suivie par le véhicule porteur 3 du système 15 dans le référentiel du véhicule porteur 3 en utilisant des données odométriques du véhicule 3, telles que des valeurs mesurées de la vitesse $V_x$ du véhicule 3 et la vitesse de lacet $V_{psi}$ du véhicule 3.

La vitesse du véhicule $V_x$ et la vitesse de lacet $V_{psi}$ sont mesurées régulièrement (par exemple, elles sont fournies par le système ESP (électro-stabilisateur programmé) du véhicule permettant de corriger la trajectoire du véhicule) et ces valeurs mesurées sont fournies à l'unité de calcul 28 pour déterminer la trajectoire prise par le véhicule 3.

L'unité de calcul 28 est configurée pour reconstituer, au temps t, la trajectoire (X,Y) du véhicule porteur 3 dans le repère du véhicule porteur.

Pour chaque instant t, la trajectoire (X,Y) inclut une valeur X d'un premier axe de coordonnées x s'étendant dans une direction suivant sensiblement la longueur du véhicule porteur, et une valeur Y d'un second axe de coordonnées y s'étendant dans une direction suivant sensiblement la largeur du véhicule porteur, le second axe de coordonnées y étant perpendiculaire au premier axe de coordonnées x.

A partir d'un temps t=0, l'unité de calcul 28 enregistre les informations fournis : vitesse longitudinale $V_x(t)$ et vitesse de lacet $V_{psi}(t)$ du véhicule porteur.

L'unité de calcul 28 est configurée pour calculer à chaque instant t la trajectoire du véhicule porteur 3 dans le repère absolu « Terre », selon les équations suivantes :

$$\psi(t) = \int_0^t \left( \frac{d\psi(t)}{dt} \right).dt \qquad (1)$$

$$X_{abs}(t) = \int_0^t V_X(t) \times \cos(\psi(t)).dt \qquad (2)$$

$$Y_{abs}(t) = \int_0^t V_X(t) \times \sin(\psi(t)).dt \qquad (3)$$

où $\psi(t)$ est l'angle de lacet et d$\psi(t)$/dt la vitesse de lacet.

Les valeurs $X_{abs}(T)$ et $Y_{abs}(T)$, pour T compris entre 0 et t, sont stockées dans les moyens de stockage 29 pour déterminer la trajectoire prise par le véhicule 3.

L'unité de calcul 28 est configurée pour calculer, à chaque instant t, la trajectoire X(T), Y(T) dans le repère du véhicule porteur, pour T compris entre 0 et t, selon les équations suivantes :

$$X(T) = \left(X_{abs}(T) - X_{abs}(t)\right) \times \cos(\psi(t)) + \left(Y_{abs}(T) - Y_{abs}(t)\right) \times \sin(\psi(t)) \qquad (4)$$

$$Y(T) = \left(Y_{abs}(T) - Y_{abs}(t)\right) \times \cos(\psi(t)) - \left(X_{abs}(T) - X_{abs}(t)\right) \times \sin(\psi(t)) \qquad (5)$$

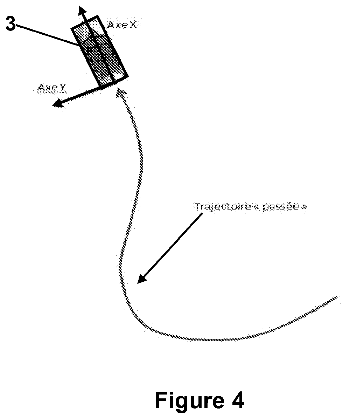

et la Figure 4 illustre une trajectoire (X(T), Y(T)) du véhicule porteur 3 calculée par l'unité de calcul 28.

Les moyens 21 pour déterminer une position des lignes de marquage de voie sur une route, à chaque instant t, sont configurés pour positionner les lignes correspondant au marquage des voies dans le repère du véhicule porteur 3.

Les moyens 21 incluent une caméra avant CA1 et/ou une caméra arrière CA2, un calculateur 31, des moyens de stockage 33 (tel qu'une mémoire flash) et un logiciel, par exemple, du type utilisé pour les systèmes d'alerte de franchissement involontaire de ligne (AFIL). Le logiciel est stocké dans les moyens de stockage 33.

Le calculateur 31 est apte à recevoir les images de la caméra avant CA1 et/ou la caméra arrière CA2 et à mettre en oeuvre le logiciel afin de traiter les images et de positionner les lignes de marquage de voie à chaque instant, par rapport au véhicule porteur, et pour un temps T compris entre 0 et t, suivant l'axe y.

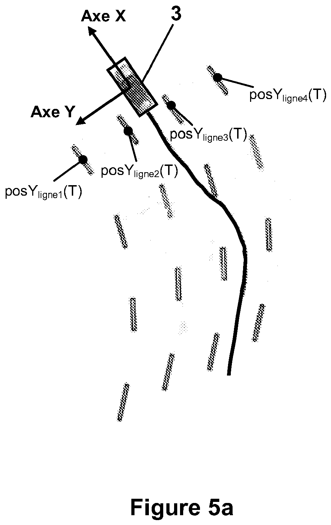

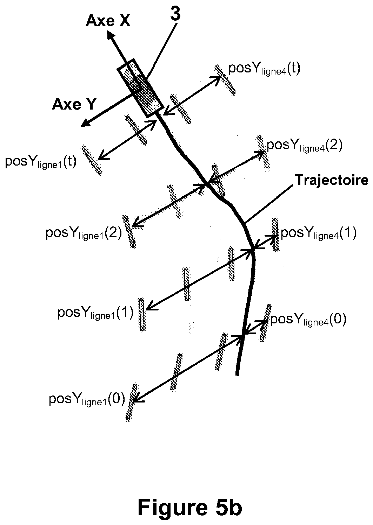

Par exemple, les positions des lignes de marquage de voie à l'instant T $posY_{ligne1}(T)$, $posY_{ligne2}(T)$, $posY_{ligne3}(T)$ et $posY_{ligne4}(T)$ déterminées par le calculateur 31 sont illustrées dans la Figure 5a. La Figure 5b illustre les positionnements des lignes externes de marquage par rapport au véhicule porteur suivant l'axe y pour un temps T compris entre 0 et t déterminé par le calculateur 31, Le calculateur 31 détermine la distance suivant l'axe y entre le véhicule porteur et chaque ligne externe de marquage que le véhicule dépasse. Ceci est en fait effectué pour tous les lignes de marquage de voie que le véhicule porteur dépasse durant un temps T compris entre 0 et t.

Les moyens 23 pour calculer une trajectoire de chacune des lignes de marquage de voie par rapport au véhicule incluent le calculateur 31 et les moyens de stockage 33 comprenant un algorithme pour calculer la trajectoire de chacune des lignes de marquage au sol dans le repère du véhicule porteur 3, pour un temps T compris entre 0 et t.

Le calculateur 31 est relié à l'unité de calcul 28 et apte à recevoir les valeurs de la trajectoire (X(T), Y(T)) du véhicule porteur calculées par l'unité de calcul 28.

Le calculateur 31 est configuré pour mettre en oeuvre l'algorithme afin de calculer la trajectoire de chacune des lignes de marquage de voie dans le repère du véhicule porteur 3, pour un temps T compris entre 0 et t.

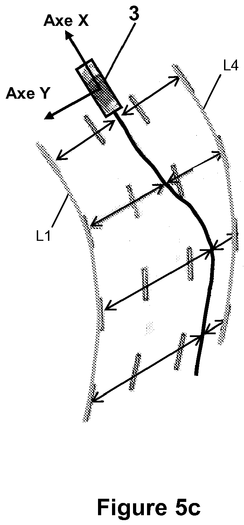

Par exemple, selon l'algorithme, la trajectoire ($X_{ligne}(T)$,$Y_{ligne}(T)$) de chacune des lignes de marquage de voie est calculée selon les équations suivantes, données ici pour la ligne n°1 (L1 dans la Figure 5c) :

$$X_{ligne1}(T) = X(T) \qquad (6)$$

$$Y_{ligne1}(T) = Y(T) + posY_{ligne1}(T) \qquad (7)$$

où X(T) et Y(T) sont les valeurs de la trajectoire prise par le véhicule porteur calculées par l'unité de calcul 28.

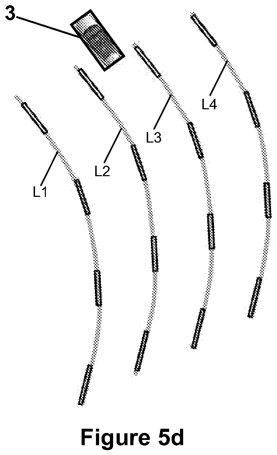

La Figure 5c illustre les trajectoires L1 et L4 des lignes de marquage externes calculées par le calculateur 31 pour T compris entre 0 et t. La Figure 5d illustre la trajectoire ($X_{ligne}(T)$,$Y_{ligne}(T)$) de chacune des lignes de marquage de voie (L1 à L4) calculée par le calculateur 31 pour T compris entre 0 et t.

Les moyens 19 pour déterminer une position d'un véhicule suiveur 5 par rapport au véhicule porteur 3 comprennent un système de radar 34 incluant deux radars R1, R2 positionnés à l'arrière gauche et à l'arrière droit du véhicule porteur 3 et un calculateur 35 configuré pour recevoir les valeurs calculées par le système 34 telles que la distance relative longitudinale du véhicule cible 5 par rapport au véhicule porteur 3, l'angle relatif du véhicule cible 5 par rapport au véhicule porteur 3 ainsi que la vitesse relative longitudinale des véhicules.

Le système de radar 34 est apte à déterminer si un ou plusieurs véhicules cibles se trouvent dans la zone 'Surveillance Angle Mort' (SAM) précédemment mentionnée et à fournir un signal indiquant la présence d'un véhicule cible dans la zone SAM au calculateur 35. Les deux radars R1, R2 du système de radar 34 couvrent en outre la zone CVW précédemment mentionnée du côté gauche et droit du véhicule porteur 3.

Le calculateur 35 est en outre configuré pour positionner le(s) véhicule(s) cible(s) à une position $X_{cible}(t),Y_{cible}(t)$ dans le repère du véhicule porteur 3 en utilisant les valeurs mesurées de la distance relative et de l'angle relatif du véhicule cible 5 par rapport au véhicule porteur 3.

Le calculateur central 27 du système 15 est relié aux moyens 23 pour calculer une trajectoire de chacune des lignes de marquage de voie, aux moyens 19 pour déterminer une position d'un véhicule suiveur 5 par rapport au véhicule porteur 3 et aux moyens 25 pour signaler la présence du véhicule suiveur 5.

Le calculateur central 27 inclut des moyens de stockage 37, tel qu'une mémoire flash, comprenant un algorithme pour faire fonctionner le système 15 et pour identifier le (les) véhicule(s) cible(s) nécessitant de prévenir le conducteur du véhicule porteur.

Le calculateur central 27 est apte à recevoir la position $X_{cible}(t),Y_{cible}(t)$ d'un véhicule suiveur 5 et le signal indiquant la présence d'un véhicule cible dans la zone SAM du calculateur 35 ainsi que les valeurs de la distance relative, l'angle relatif d'un véhicule suiveur et la vitesse relative longitudinale. Le calculateur central 27 détermine que le véhicule suiveur 5 n'est pas dans la zone SAM lorsque le signal indiquant la présence d'un véhicule suiveur dans la zone SAM n'est pas reçu et le calculateur central 27 reçoit la position relative $X_{cible}(t),Y_{cible}(t)$ du calculateur 35,

De plus, le calculateur central 27 est apte à recevoir la trajectoire $(X_{ligne}(T),Y_{ligne}(T))$ de chacune des lignes de marquage de voie du calculateur 31. Ces données sont stockées dans les moyens de stockage 37.

Le calculateur central 27 est configuré pour mettre en oeuvre l'algorithme afin d'identifier le (les) véhicule(s) cible(s) nécessitant de prévenir le conducteur du véhicule porteur.

Le calculateur central 27, en mettant en oeuvre l'algorithme, calcule un numéro de voie i à affecter à un véhicule cible 5. Pour chaque véhicule cible, les trajectoires calculées $(X_{ligne}(T),Y_{ligne}(T))$ et la position relative du véhicule cible $(X_{cible}(t),Y_{cible}(t))$ sont utilisés pour affecter un numéro de voie i au véhicule cible 5.

Le calculateur central 27 recherche tout d'abord le temps T correspondant à $X_{ligne}(T)=X_{cible}(t)$, puis le véhicule cible 5 est affecté à la voie « i » si :

$$Y_{ligne\,i}(T) < Y_{cible}(t) < Y_{ligne\,i+1}(T) \qquad (8)$$

Le calculateur central 27 calcule un numéro de voie i à affecter au véhicule porteur 3 selon le même principe, par exemple, le véhicule porteur 3 est affecté à la voie « i » si :

$$Y_{ligne\,i}(t) < 0 < Y_{ligne\,i+1}(t) \qquad (9)$$

Il est ainsi déterminé si le véhicule cible 5 est soit sur la même voie que le véhicule porteur 3, soit sur une voie adjacente (une voie d'écart de la voie du véhicule porteur 3) à celle du véhicule porteur 3 ou soit sur une voie située à plus d'une voie d'écart de la voie du véhicule porteur 3.

Le calculateur central 27 est configuré pour envoyer un signal d'activation aux moyens 25.

Les moyens 25 pour signaler la présence du véhicule suiveur 5 comprend, par exemple, un mécanisme de vibration du siège du conducteur ou un voyant sur le tableau de bord ou le rétroviseur latéral qui est déclenché lorsque le signal d'activation est reçu du calculateur central 27.

Le calculateur central 27 est en plus configuré pour déterminer si la présence d'un véhicule suiveur 5 dans la zone SAM a été signalée par le calculateur 35. Le calculateur central 27 est en plus configuré pour calculer un temps avant collision (en anglais, 'Time To Collision') TTC en utilisant la distance relative longitudinale et la vitesse relative longitudinale fournies par le calculateur 35.

Le calculateur central 27 est configuré pour envoyer un signal d'activation lorsqu'un véhicule suiveur 5 est dans la zone 'Surveillance Angle Mort' (SAM), ou lorsqu'un véhicule suiveur n'est pas dans la zone SAM, mais sur une voie adjacente à celle du véhicule porteur 3 et a un temps avant collision TTC (en anglais, 'Time To Collision') inférieur à un seuil TTC prédéterminé, par exemple, 4 secondes.

L'opération du système 15 selon le premier mode de réalisation de la présente invention sera maintenant décrite.

La trajectoire (X,Y) suivie par le véhicule 3 porteur du système 15 dans le référentiel du véhicule porteur 3 est déterminé selon les équations (1) à (5) en utilisant des valeurs mesurées de la vitesse $V_x$ du véhicule porteur 3 et la vitesse de lacet $V_{psi}$ du véhicule porteur 3.

Une position des lignes de marquage de voie sur la route à chaque instant $posY_{lignei}(T)$ pour T compris entre 0 et t par rapport au véhicule 3, et suivant l'axe y du véhicule 3 à l'instant T, est déterminée en utilisant une caméra avant CA1 et/ou une caméra arrière CA2.

Une trajectoire $(X_{ligne}(T),Y_{ligne}(T))$ de chacune des lignes de marquage de voie par rapport au véhicule 3 est calculée en utilisant les valeurs de la trajectoire$(X(T),Y(T))$ prise par le véhicule et la position des lignes de marquage de voie selon les équations (6) à (7).

Une position $X_{cible}(t),Y_{cible}(t)$ d'un véhicule suiveur 5 (ou plusieurs véhicules suiveurs) par rapport au véhicule porteur 3 est déterminé en utilisant les valeurs mesurées par le système de radar 34 de la distance relative et l'angle relatif du véhicule cible par rapport au véhicule porteur.

Un numéro de voie i est affecté à un véhicule cible 5. Pour chaque véhicule cible, les trajectoires calculées $(X_{ligne}(T),Y_{ligne}(T))$ et la position relative du véhicule cible $(X_{cible}(t),Y_{cible}(t))$ sont utilisés pour affecter un numéro de voie i au véhicule cible 5.

Le temps T correspondant à $X_{ligne}(T)=X_{cible}(t)$ est trouvé et puis le véhicule cible 5 est affectée à la voie « i » si :

$$Y_{ligne\,i}(T) < Y_{cible}(t) < Y_{ligne\,i+1}(T)$$

Le véhicule porteur 3 est affecté à la voie « i » si :

$$Y_{ligne\,i}(t) < 0 < Y_{ligne\,i+1}(t)$$

Il est déterminé si le véhicule cible 5 est sur une voie adjacente à celle du véhicule porteur 3 et un signal d'activation est envoyé aux moyens 25 lorsque le véhicule cible 5 est dans la zone 'Surveillance Angle Mort' (SAM), ou lorsque le véhicule cible 5 est sur une voie adjacente et n'est pas dans la zone SAM, mais a un temps avant collision TTC inférieur à un seuil TTC prédéterminé.

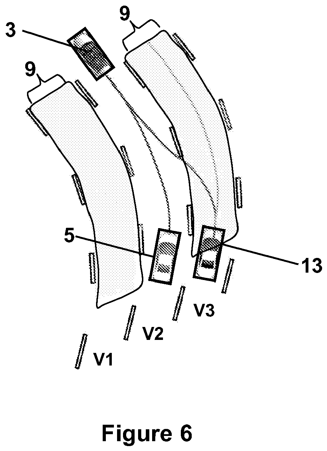

La Figure 6 illustre le cas où le véhicule porteur du système d'assistance au changement de voie selon la présente invention change de voie, pour passer de la troisième voie V3 à la deuxième voie V2. Le véhicule cible 5 qui se trouve sur la deuxième voie V2 n'est plus sur la voie adjacente 9 calculée par le système selon la présente invention et il n'est plus signalé au conducteur du véhicule porteur 3. Un véhicule cible 13 qui est sur la troisième voie V3 (ou la première voie V1), va être signalé car il est dans la voie adjacente 9 calculée par le système selon la présente invention.

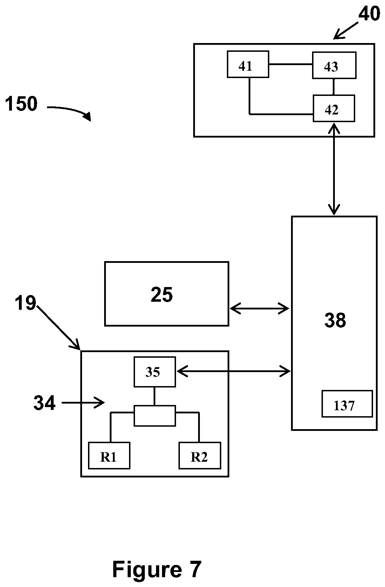

La Figure 7 représente un système 150 d'assistance au changement de voie selon un deuxième mode de réalisation de la présente invention.

Le système 150 comprend des moyens 19 pour déterminer une position d'un véhicule suiveur 5 par rapport au véhicule 3, des moyens 25 pour signaler la présence d'un véhicule suiveur 5, un calculateur central 38 et un système de navigation et de positionnement par satellite 40.

Les moyens 19 pour déterminer une position d'un véhicule suiveur 5 par rapport au véhicule 3 et les moyens 25 pour signaler la présence d'un véhicule suiveur 5 dans une voie adjacente à la voie du véhicule 3 sont identiques aux moyens 19 et aux moyens 25 du premier mode de réalisation.

Le système de navigation et de positionnement par satellite (tel qu'un système de navigation GPS) a une précision d'au moins 1 mètre et comprend, des moyens de stockage 41 (tel qu'une mémoire flash), un calculateur 42 et un récepteur 43 des signaux émis par une constellation de satellites, par exemple, des signaux GPS.

Le récepteur 43 inclut un microprocesseur pour traiter simultanément les signaux reçus des satellites et pour calculer la position $(X_{abs}(t),Y_{abs}(t))$ du véhicule 3 dans le référentiel « terre » afin de déterminer la trajectoire suivie par le véhicule 3 porteur du système 150 dans le référentiel « Terre ». La position $(X_{abs}(t),Y_{abs}(t))$ est fournie aux moyens de stockage 41 et enregistrée.

Les moyens de stockage 41 incluent une cartographie des voies du réseau routier dans le référentiel « Terre » et un logiciel pour faire fonctionner le système.

La cartographie des voies du réseau routier dans le référentiel « Terre » permet de connaitre la trajectoire des voies dans le référentiel « Terre ».

Le calculateur 42 est configuré pour déterminer, à partir des données cartographie des voies du réseau routier, les trajectoires des lignes délimitant les voies $(X_{ligne\,abs},Y_{ligne\,abs})$ dans le référentiel « Terre » de chacune des lignes de marquage de voie. Les trajectoires calculées sont stockées dans les moyens de stockage 41.

Le calculateur 42 est apte à calculer une position angulaire du véhicule (angle de lacet) par rapport au repère « Terre » en utilisant l'évolution de la position $(X_{abs}(t),Y_{abs}(t))$ fourni par le récepteur 43 du véhicule porteur, par exemple, en utilisant deux positions successives (stockés dans les moyens de stockage 41) aux temps t et t+dt, selon l'équation suivante:

$$\psi(t) = \arctan\left(\frac{Y_{abs}(t+dt) - Y_{abs}(t)}{X_{abs}(t+dt) - X_{abs}(t)}\right) \qquad (10)$$

où $\psi(t)$ est l'angle de lacet.

Le système de navigation et de positionnement par satellite 40 permet ainsi de déterminer, dans le repère « Terre », les trajectoires des lignes délimitant les voies, ainsi que la position $(X_{abs}(t), Y_{abs}(t))$ et la position angulaire du véhicule porteur 3.

Le calculateur central 38 du système 150 est relié aux moyens 19, aux moyens 25 pour signaler la présence du véhicule suiveur et au système de navigation et de positionnement par satellite 40.

Le calculateur central 38 inclut des moyens de stockage 137, tel qu'une mémoire flash, comprenant un logiciel pour faire fonctionner le système 150 d'assistance au changement de voie.

Le calculateur central 38 est apte à recevoir la trajectoire $(X_{abs}(t), Y_{abs}(t))$ suivie par le véhicule porteur du système de navigation et de positionnement par satellite 40 ainsi que les trajectoires des lignes délimitant les voies $(X_{ligne\,abs}, Y_{ligne\,abs})$ dans le référentiel « terre » de chacune des lignes de marquage de voie calculée par le calculateur 42.

Le calculateur central 38 est en outre apte à recevoir la position relative $X_{cible}(t), Y_{cible}(t)$ d'un véhicule suiveur dans le repère du véhicule porteur et le signal indiquant la présence d'un véhicule suiveur dans la zone SAM du calculateur 35 ainsi que les valeurs de la distance relative, l'angle relatif d'un véhicule suiveur et la vitesse relative longitudinale. Le calculateur central 38 détermine que le véhicule suiveur 5 n'est pas dans la zone SAM lorsque le signal indiquant la présence d'un véhicule suiveur dans la zone SAM n'est pas reçu et le calculateur central 27 reçoit la position relative $X_{cible}(t), Y_{cible}(t)$ du calculateur 35,

Le calculateur central 38 est en plus configuré pour mettre en oeuvre un algorithme (stocké dans les moyens de stockage 137) afin de calculer le positionnement du (des) véhicule(s) cible(s) dans le repère « Terre », en utilisant la position $(X_{abs}(t), Y_{abs}(t))$ et la position angulaire du véhicule 3, selon les équations suivantes :

$$X_{cible\,abs}(t) = \left(X_{cible}(t) + X_{abs}(t)\right) \times \cos(\psi(t)) - \left(Y_{cible}(t) + Y_{abs}(t)\right) \times \sin(\psi(t)) \quad (11)$$

$$Y_{cible\,abs}(t) = \left(Y_{cible}(t) + Y_{abs}(t)\right) \times \cos(\psi(t)) + \left(X_{cible}(t) + X_{abs}(t)\right) \times \sin(\psi(t)) \quad (12)$$

Le calculateur central 38 est configuré pour mettre en oeuvre un algorithme (stocké dans les moyens de stockage 137) afin d'identifier le (les) véhicule(s) cible(s) nécessitant de prévenir le conducteur du véhicule porteur.

Le calculateur central 38, en mettant en oeuvre l'algorithme, calcule un numéro de voie i à affecter à un véhicule cible 5. Pour chaque véhicule cible, les trajectoires calculées $(X_{ligne\,abs}, Y_{ligne\,abs})$ et la position relative du véhicule cible $(X_{cible\,abs}(t), Y_{cible\,abs}(t))$ sont utilisés pour affecter un numéro de voie i au véhicule cible 5.

De par la connaissance, dans le référentiel Terre, du positionnement des lignes délimitant les voies, du positionnement de la cible, et du positionnement du véhicule porteur, un numéro de voie est affecté à l'instant t au véhicule porteur 3, ainsi qu'au véhicule cible 5.

Il est ainsi déterminé si le véhicule cible 5 est soit sur la même voie que le véhicule porteur 3, soit sur une voie adjacente (une voie d'écart de la voie du véhicule porteur 3) à celle du véhicule porteur 3 ou soit sur une voie située à plus d'une voie d'écart de la voie du véhicule porteur 3.

Le calculateur central 38 est configuré pour envoyer un signal d'activation aux moyens 25.

Le calculateur central 38 est en plus configuré pour déterminer si la présence d'un véhicule suiveur 5 dans la zone SAM a été signalée par le calculateur 35. Le calculateur central 38 est en plus configuré pour calculer un temps avant collision (en anglais, 'Time To Collision') TTC en utilisant la distance relative longitudinale et la vitesse relative longitudinale fournies par le calculateur 35.

Le calculateur central 38 est configuré pour envoyer un signal d'activation lorsqu'un véhicule suiveur 5 est dans la zone 'Surveillance Angle Mort' (SAM), ou lorsqu'un véhicule suiveur n'est pas dans la zone SAM mais sur une voie adjacente à celle du véhicule porteur 3 et a un temps avant collision TTC (en anglais, 'Time To Collision') inférieur à un seuil TTC prédéterminé, par exemple, 4 secondes.

L'opération du système 150 selon le deuxième mode de réalisation la présente invention sera maintenant décrite.

La trajectoire $(X_{abs}(t), Y_{abs}(t))$ suivie par le véhicule 3 porteur du système 150 dans le référentiel « Terre », la position angulaire du véhicule porteur 3 et les trajectoires des lignes délimitant les voies $(X_{ligne\,abs}, Y_{ligne\,abs})$ dans le référentiel « Terre » de chacune des lignes de marquage de voie sont déterminées et fournies par le système 40.

Une position relative $X_{cible}(t)$, $Y_{cible}(t)$ d'un véhicule suiveur 5 (ou plusieurs véhicules suiveurs) par rapport au véhicule porteur 3 est déterminée en utilisant les valeurs mesurées par le système de radar 34 de la distance relative et l'angle relatif du véhicule cible par rapport au véhicule porteur.

Un positionnement ($X_{cible\ abs}(t)$, $Y_{cible\ abs}(t)$) du (des) véhicule(s) cible(s) dans le repère « Terre » est calculé en utilisant la position ($X_{abs}(t)$, $Y_{abs}(t)$) et la position angulaire du véhicule 3, selon les équations (11) et (12).

De par la connaissance, dans le référentiel « Terre », du positionnement des lignes délimitant les voies, du positionnement de la cible, et du positionnement du véhicule porteur, un numéro de voie est affecté à l'instant t au véhicule porteur 3, ainsi qu'au véhicule cible 5.

Il est déterminé si le véhicule cible 5 est sur une voie adjacente à celle du véhicule porteur 3 et un signal d'activation est envoyé aux moyens 25 lorsque le véhicule cible 5 est dans la zone SAM, ou lorsque le véhicule cible 5 est sur une voie adjacente et n'est pas dans la zone SAM, mais a un temps avant collision TTC inférieur à un seuil TTC prédéterminé.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées. Par exemple, le calculateur central 38 peut comprendre le système 40.

**Revendications**

1.   Système (15 ; 150) d'assistance au changement de voie pour un véhicule (3) comprenant :

   - des moyens (17 ; 40) pour déterminer une trajectoire prise par le véhicule porteur (3) sur une route ;
   - des moyens (19) pour déterminer une position d'un véhicule suiveur (5) par rapport au véhicule porteur (3) ;
   - des moyens (27 ; 38) pour déterminer si le véhicule suiveur (5) se trouve dans une voie adjacente à la voie du véhicule porteur (3) ;

   **caractérisé en ce qu'**il comporte

   - des moyens (23 ; 40) pour déterminer une trajectoire des lignes de marquage de voie de la route ; et
   - des moyens (25) pour signaler la présence du véhicule suiveur (5) dans la voie adjacente après un changement de voie du véhicule porteur (3);

2.   Système (15) selon la revendication 1, **caractérisé en ce qu'**il comprend en outre des moyens (21) pour déterminer, en fonction du temps, une position des lignes de marquage de voie par rapport au véhicule (3).

3.   Système (15) selon la revendication 2, **caractérisé en ce que** les moyens (23) pour déterminer une trajectoire de chacune des lignes de marquage de voie sont configurés pour calculer une trajectoire de chacune des lignes de marquage de voie en utilisant la trajectoire prise par le véhicule (3) et la position des lignes de marquage de voie.

4.   Système (15 ; 150) selon l'une quelconque des revendications 1 à 3, **caractérisé en ce qu'**il est configuré pour déterminer la voie d'un véhicule suiveur (5) en utilisant les trajectoires des lignes de marquage de voie et la position du véhicule suiveur (5) par rapport au véhicule (3), et pour déterminer la voie du véhicule (3) en utilisant les trajectoires des lignes de marquage de voie et la position du véhicule (3).

5.   Système (15) selon l'une quelconque des revendications précédentes, **caractérisée en ce que** les moyens (23) pour déterminer une position des lignes de marquage de voie par rapport au véhicule (3) comprennent une caméra positionnée à l'avant du véhicule et/ou une caméra positionnée à l'arrière du véhicule.

6.   Système (150) selon la revendication 1, **caractérisée en ce qu'**il comprend un système de navigation et de positionnement par satellite (40) incluant une cartographie des voies de la route, le système (40) étant configuré pour déterminer une trajectoire des lignes de marquage de voie de la route à partir de la cartographie des voies.

7.   Procédé pour déterminer la présence d'un véhicule suiveur (5) dans une voie adjacente à une voie d'un véhicule porteur (3) **caractérisé en ce qu'**il comprend des étapes qui consistent à :

   - déterminer une trajectoire prise par le véhicule porteur (3) sur une route ;
   - déterminer une trajectoire des lignes de marquage de voie de la route ;

- déterminer une position d'un véhicule suiveur (5) par rapport au véhicule porteur (3) ;
- déterminer si le véhicule suiveur (5) se trouve dans une voie adjacente à la voie du véhicule porteur (3) ; et
- signaler la présence du véhicule suiveur (5) dans la voie adjacente après un changement de voie du véhicule porteur (3).

8. Procédé selon la revendication précédente, **caractérisé en ce qu'**il comprend en outre l'étape qui consiste à :

- déterminer, en fonction du temps, une position des lignes de marquage de voie par rapport au véhicule (3).

9. Procédé selon la revendication précédente, **caractérisé en ce que** lors de l'étape de détermination d'une trajectoire des lignes de marquage de voie, une trajectoire de chacune des lignes de marquage de voie est calculée en utilisant la trajectoire prise par le véhicule (3) et la position des lignes de marquage de voie.

10. Véhicule automobile comprenant le système (15 ; 150) selon l'une quelconque des revendications 1 à 6.

**Patentansprüche**

1. Spurwechselassistenzsystem (15; 150) für ein Fahrzeug (3), das Folgendes umfasst:

   - Mittel (17; 40) zum Bestimmen einer Bahn, die das Trägerfahrzeug (3) auf einer Straße einschlägt;
   - Mittel (19) zum Bestimmen einer Position eines Folgefahrzeugs (5) in Bezug zu dem Trägerfahrzeug (3) ;
   - Mittel (27; 38) zum Bestimmen, ob sich das Folgefahrzeug (5) auf einer Fahrspur benachbart zu der Fahrspur des Trägerfahrzeugs (3) befindet;

   **dadurch gekennzeichnet, dass** es Folgendes umfasst:

   - Mittel (23; 40) zum Bestimmen einer Bahn der Fahrspur-Markierungslinien der Straße; und
   - Mittel (25) zum Melden der Gegenwart des Folgefahrzeugs (5) in der benachbarten Fahrspur nach einem Fahrspurwechsel des Trägerfahrzeugs (3) .

2. System (15) nach Anspruch 1, **dadurch gekennzeichnet, dass** es außerdem Mittel (21) umfasst, um zeitabhängig eine Position der Fahrspur-Markierungslinien in Bezug zu dem Fahrzeug (3) zu bestimmen.

3. System (15) nach Anspruch 2, **dadurch gekennzeichnet, dass** die Mittel (23) zum Bestimmen einer Bahn jeder der Fahrspur-Markierungslinien konfiguriert sind, um eine Bahn jeder der Fahrspur-Markierungslinien zu berechnen, indem die Bahn, die das Fahrzeug (3) einschlägt, und die Position der Fahrspur-Markierungslinien verwendet werden.

4. System (15; 150) nach einem der Ansprüche 1 bis 3, **dadurch gekennzeichnet, dass** es konfiguriert ist, um die Fahrspur eines Folgefahrzeugs (5) zu bestimmen, indem die Bahnen der Fahrspur-Markierungslinien und die Position des Folgefahrzeugs (5) in Bezug zu dem Fahrzeug (3) verwendet werden, und um die Fahrspur des Fahrzeugs (3) zu bestimmen, indem die Bahnen der Fahrspur-Markierungslinien und die Position des Fahrzeugs (3) verwendet werden.

5. System (15) nach einem der vorhergehenden Ansprüche, **dadurch gekennzeichnet, dass** die Mittel (23) zum Bestimmen einer Position der Fahrspur-Markierungslinien in Bezug zu dem Fahrzeug (3) eine Kamera umfassen, die an der Vorderseite des Fahrzeugs positioniert ist, und/oder eine Kamera, die an der Rückseite des Fahrzeugs positioniert ist.

6. System (150) nach Anspruch 1, **dadurch gekennzeichnet, dass** es ein Satelliten-Navigations- und Positionierungssystem (40) umfasst, das eine Kartographie der Fahrspuren der Straße aufweist, wobei das System (40) konfiguriert ist, um eine Bahn der Fahrspur-Markierungslinien der Straße ausgehend von der Kartographie der Fahrspuren zu bestimmen.

7. Verfahren zum Bestimmen der Gegenwart eines Folgefahrzeugs (5) in einer zu einer Fahrspur eines Trägerfahrzeugs (3) benachbarten Fahrspur, **dadurch gekennzeichnet, dass** es Schritte umfasst, die aus Folgendem bestehen:

   - Bestimmen einer Bahn, die das Trägerfahrzeug (3) auf einer Straße einschlägt;

- Bestimmen einer Bahn der Fahrspur-Markierungslinien der Straße;
- Bestimmen einer Position eines Folgefahrzeugs (5) in Bezug zu dem Trägerfahrzeug (3);
- Bestimmen, ob sich das Folgefahrzeug (5) in einer Fahrspur benachbart zu der Fahrspur des Trägerfahrzeugs (3) befindet; und
- Melden der Gegenwart des Folgefahrzeugs (5) in der benachbarten Fahrspur nach einem Fahrspurwechsel des Folgefahrzeugs (3).

8. Verfahren nach dem vorhergehenden Anspruch, **dadurch gekennzeichnet, dass** es außerdem den Schritt umfasst, der aus Folgendem besteht:

- zeitabhängig Bestimmen einer Position der Fahrspur-Markierungslinien in Bezug zu dem Fahrzeug (3).

9. Verfahren nach dem vorhergehenden Anspruch, **dadurch gekennzeichnet, dass** bei dem Schritt des Bestimmens einer Bahn der Fahrspur-Markierungslinien eine Bahn jeder der Fahrspur-Markierungslinien berechnet wird, indem die Bahn, die von dem Fahrzeug (3) eingeschlagen wird, und die Position der Fahrspur-Markierungslinien verwendet werden.

10. Kraftfahrzeug, das das System (15; 150) nach einem der Ansprüche 1 bis 6 umfasst.

**Claims**

1. A lane change assistance system (15; 150) for a vehicle (3) including:

- means (17; 40) for determining a path taken by the carrier vehicle (3) on a road;
- means (19) for determining a position of a following vehicle (5) with respect to the carrier vehicle (3);
- means (27; 38) for determining if the following vehicle (5) is situated in an adjacent lane to the lane of the carrier vehicle (3);

**characterized in that** it comprises

- means (23; 40) for determining a path of the lane marking lines on the road; and
- means (25) for signalling the presence of the following vehicle (5) in the adjacent lane after a change of lane of the carrier vehicle (3).

2. The system (15) according to Claim 1, **characterized in that** it further includes means (21) for determining, as a function of time, a position of the lane marking lines with respect to the vehicle (3).

3. The system (15) according to Claim 2, **characterized in that** the means (23) for determining a path of each of the lane marking lines are configured to calculate a path of each of the lane marking lines using the path taken by the vehicle (3) and the position of the lane marking lines.

4. The system (15; 150) according to any one of Claims 1 to 3, **characterized in that** it is configured for determining the path of a following vehicle (5) using the paths of the lane marking lines and the position of the following vehicle (5) with respect to the vehicle (3), and for determining the path of the vehicle (3) using the paths of the lane marking lines and the position of the vehicle (3).

5. The system (15) according to any one of the preceding claims, **characterized in that** the means (23) for determining a position of the lane marking lines with respect to the vehicle (3) include a camera positioned at the front of the vehicle and/or a camera positioned at the rear of the vehicle.

6. The system (150) according to Claim 1, **characterized in that** it includes a system of navigation and of positioning by satellite (40) including a mapping of the lanes on the road, the system (40) being configured for determining a path of the lane marking lines on the road from the mapping of the lanes.

7. A method for determining the presence of a following vehicle (5) in a lane adjacent to a lane of a carrier vehicle (3), **characterized in that** it includes steps which consist of:

- determining a path taken by the carrier vehicle (3) on a road;
- determining a path of the lane marking lines on the road;
- determining a position of a following vehicle (5) with respect to the carrier vehicle (3);
- determining if the following vehicle (5) is situated in a lane adjacent to the lane of the carrier vehicle (3); and
- signalling the presence of the following vehicle (5) in the adjacent lane after a change of lane of the carrier vehicle (3).

8. The method according to the preceding claim, **characterized in that** it further includes the step which consists of:

- determining, as a function of time, a position of the lane marking lines with respect to the vehicle (3).

9. The method according to the preceding claim, **characterized in that** during the step of determining a path of the lane marking lines, a path of each of the lane marking lines is calculated by using the path taken by the vehicle (3) and the position of the lane marking lines.

10. A motor vehicle including the system (15; 150) according to any one of Claims 1 to 6.

**Figure 1**

**Figure 2**

**Figure 3**

3

AxeX

AxeY

Trajectoire « passée »

**Figure 4**

**Figure 5a**

**Figure 5b**

**Figure 5c**

**Figure 5d**

Figure 6

**Figure 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6388565 B
- DE 10327869